# EUROPEAN PATENT APPLICATION

(11) **EP 4 760 755 A1**
(43) Date of publication of application: **17.06.2026**
(21) Application number: 24851559.5
(22) Date of filing: 18.07.2024
(51) Int. Cl.: H01B 13/00, B23K 26/082, B23K 26/38, H01B 12/06

(54) **SUPERCONDUCTING WIRE MATERIAL MANUFACTURING METHOD AND MANUFACTURING DEVICE**

(30) Priority: 09.08.2023 JP 2023130200
(71) Applicant: Sumitomo Electric Industries, Ltd., Osaka-shi, Osaka 541-0041 (JP)
(72) Inventor: SAITO, Kenji, Osaka-shi, Osaka 541-0041 (JP); UETSUKI, Ryota, Osaka-shi, Osaka 541-0041 (JP)
(74) Representative: Grünecker Patent- und Rechtsanwälte PartG mbB
(86) International application number: PCT/JP2024/025771
(87) International publication number: WO 2025/033130

(57) **Abstract**

A method for manufacturing a superconducting wire includes: preparing a superconducting wire to be cut having a first main surface and a second main surface opposite to the first main surface; and transporting the superconducting wire to be cut, along a longitudinal direction of the superconducting wire to be cut, by a first transport mechanism and a second transport mechanism which are disposed to be spaced apart from each other. The superconducting wire to be cut is supported, at the first main surface, by a pulley disposed between the first transport mechanism and the second transport mechanism. The method for manufacturing the superconducting wire further includes cutting the superconducting wire to be cut, by irradiating the second main surface at a portion of the superconducting wire to be cut supported by the pulley with a laser when the superconducting wire to be cut is transported.

## Description

### TECHNICAL FIELD

The present disclosure relates to a method for manufacturing a superconducting wire, and a manufacturing apparatus. The present application claims priority based on Japanese Patent Application No. 2023-130200 filed on August 9, 2023. The entire contents described in the Japanese Patent Application are incorporated herein by reference.

### BACKGROUND ART

For example, Japanese Patent Laying-Open No. 2013-55061 (PTL 1) describes a superconducting wire. The superconducting wire described in PTL 1 has an oriented metal substrate, an intermediate layer disposed on the oriented metal substrate, and an oxide superconducting layer disposed on the intermediate layer. The superconducting wire described in PTL 1 is wide (for example, has a width of 2 cm or more).

For example, Japanese Patent Laying-Open No. 2017-91679 (PTL 2) describes a method for cutting a superconducting wire. In the method for cutting the superconducting wire described in PTL 2, the superconducting wire is cut by irradiating it with a laser.

### CITATION LIST

### PATENT LITERATURE

PTL 1: Japanese Patent Laying-Open No. 2013-55061
PTL 2: Japanese Patent Laying-Open No. 2017-91679

### SUMMARY OF INVENTION

A method for manufacturing a superconducting wire of the present disclosure includes: preparing a superconducting wire to be cut having a first main surface and a second main surface opposite to the first main surface; and transporting the superconducting wire to be cut, along a longitudinal direction of the superconducting wire to be cut, by a first transport mechanism and a second transport mechanism which are disposed to be spaced apart from each other. The superconducting wire to be cut is supported, at the first main surface, by a pulley disposed between the first transport mechanism and the second transport mechanism. The method for manufacturing the superconducting wire further includes cutting the superconducting wire to be cut, by irradiating the second main surface at a portion of the superconducting wire to be cut supported by the pulley with a laser when the superconducting wire to be cut is transported.

### BRIEF DESCRIPTION OF DRAWINGS

[Fig. 1] Fig. 1 is a plan view of a superconducting wire 10.
[Fig. 2] Fig. 2 is a cross sectional view taken along II-II in Fig. 1.
[Fig. 3] Fig. 3 is a schematic view of a manufacturing apparatus 100.
[Fig. 4] Fig. 4 is a perspective view of a pulley 40.
[Fig. 5] Fig. 5 is a front view of pulley 40.
[Fig. 6] Fig. 6 is a partially enlarged front view of pulley 40.
[Fig. 7A] Fig. 7A is a schematic view showing a first manner of irradiation with a laser L.
[Fig. 7B] Fig. 7B is a schematic view showing a second manner of irradiation with laser L.
[Fig. 8] Fig. 8 is a cross sectional view of superconducting wire 10 according to a first modification.
[Fig. 9] Fig. 9 is a schematic cross sectional view of pulley 40 according to a third modification.
[Fig. 10] Fig. 10 is a schematic view of a laser light source 50 according to a fourth modification.
[Fig. 11] Fig. 11 is a schematic view showing a manner of irradiation with laser L when laser L is split into a plurality of beams.
[Fig. 12] Fig. 12 is a schematic view showing a manner of irradiation with laser L according to a fourth modification.
[Fig. 13] Fig. 13 is a plan view of superconducting wire 10 according to a sixth modification subjected to scribing processing.

### DETAILED DESCRIPTION

### [Problem to be Solved by the Present Disclosure]

In a wide superconducting wire such as the superconducting wire described in PTL 1, warpage occurs in a width direction. Accordingly, when the wide superconducting wire is cut with a laser as in the method for cutting the superconducting wire described in PTL 2, a focal point of the laser deviates due to warpage. As the focal point deviates more, thermal processing is performed, rather than ablation processing, as a manner of processing with the laser.

The present disclosure has been made in view of the problems of conventional techniques as described above. More specifically, the present disclosure provides a method for manufacturing a superconducting wire capable of suppressing deviation of a focal point of a laser due to warpage of a superconducting wire to be cut.

### [Advantageous Effect of the Present Disclosure]

According to the method for manufacturing the superconducting wire of the present disclosure, it is possible to suppress deviation of a focal point of a laser due to warpage of a superconducting wire to be cut.

### [Description of Embodiment of the Present Disclosure]

First, an embodiment of the present disclosure will be listed and described.
(1) A method for manufacturing a superconducting wire according to the embodiment includes: preparing a superconducting wire to be cut having a first main surface and a second main surface opposite to the first main surface; and transporting the superconducting wire to be cut, along a longitudinal direction of the superconducting wire to be cut, by a first transport mechanism and a second transport mechanism which are disposed to be spaced apart from each other. The superconducting wire to be cut is supported, at the first main surface, by a pulley disposed between the first transport mechanism and the second transport mechanism. The method for manufacturing the superconducting wire further includes cutting the superconducting wire to be cut, by irradiating the second main surface at a portion of the superconducting wire to be cut supported by the pulley with a laser when the superconducting wire to be cut is transported.

According to the method for manufacturing the superconducting wire in (1), it is possible to suppress deviation of a focal point of the laser due to warpage of the superconducting wire to be cut.

(2) In the method for manufacturing the superconducting wire in (1), on the second main surface, a position irradiated with the laser may be scanned by a galvano scanner.

According to the method for manufacturing the superconducting wire in (2), it is possible to reduce thermal influence on the superconducting wire due to irradiation with the laser.

(3) In the method for manufacturing the superconducting wire in (1) or (2), the first transport mechanism may be located upstream of the second transport mechanism in a transport direction of the superconducting wire to be cut. The first transport mechanism may have a plurality of rollers disposed in a staggered manner.

According to the method for manufacturing the superconducting wire in (3), it is possible to further suppress deviation of the focal point of the laser due to warpage of the superconducting wire to be cut.

(4) In the method for manufacturing the superconducting wire in (1) to (3), the pulley may have an outer circumferential surface that contacts the first main surface. A groove extending along a circumferential direction of the pulley may be formed in the outer circumferential surface.

According to the method for manufacturing the superconducting wire in (4), it is possible to suppress debris from being produced at the pulley after the laser penetrates the superconducting wire to be cut.

(5) In the method for manufacturing the superconducting wire in (4), a flow path may be formed inside the pulley. The flow path may be opened at a bottom surface of the groove. When the superconducting wire to be cut is supported by the pulley, the superconducting wire to be cut may be sucked through the flow path.

According to the method for manufacturing the superconducting wire in (5), it is possible to remove debris produced after the laser penetrates the superconducting wire to be cut, from a location irradiated with the laser.

(6) In the method for manufacturing the superconducting wire in (1) to (5), the superconducting wire to be cut may further have a base material, an intermediate layer disposed on the base material, and a superconducting layer disposed on the intermediate layer. The base material may constitute the second main surface.

According to the method for manufacturing the superconducting wire in (6), it is possible to further suppress deviation of the focal point of the laser due to warpage of the superconducting wire to be cut.

(7) In the method for manufacturing the superconducting wire in (1) to (5), the superconducting wire to be cut may further have a base material, an intermediate layer disposed on the base material, and a superconducting layer disposed on the intermediate layer. The base material may constitute the first main surface.

According to the method for manufacturing the superconducting wire in (7), it is possible to suppress a decrease in performance of the superconducting wire due to cutting.
(8) In the method for manufacturing the superconducting wire in (6) or (7), the superconducting wire to be cut may further have a protective layer. The protective layer may be disposed on the superconducting layer.
(9) In the method for manufacturing the superconducting wire in (8), the superconducting wire to be cut may further have a stabilized layer. The stabilized layer may be disposed on the protective layer.
(10) In the method for manufacturing the superconducting wire in (1) to (9), a wavelength of the laser may be in a green band, an ultraviolet band, or an infrared band.

According to the method for manufacturing the superconducting wire in (10), it is possible to reduce thermal influence on the superconducting wire due to irradiation with the laser.

(11) **In** the method for manufacturing the superconducting wire in (1) to (10), an assist gas may be supplied to a location irradiated with the laser.

According to the method for manufacturing the superconducting wire in (11), it is possible to remove debris produced from the superconducting wire to be cut in the vicinity of the position irradiated with the laser due to irradiation with the laser.

(12) **In** the method for manufacturing the superconducting wire in (1), the laser may be split into a plurality of beams by a diffractive optical element. Each of positions irradiated with the plurality of beams may be scanned by a galvano scanner.

According to the method for manufacturing the superconducting wire in (12), processing efficiency for the superconducting wire to be cut is improved.

(13) In the method for manufacturing the superconducting wire in (1), on the second main surface, a position irradiated with the laser may be offset along the longitudinal direction of the superconducting wire to be cut.

According to the method for manufacturing the superconducting wire in (13), thermal influence on the superconducting layer is reduced, and processing efficiency for the superconducting wire is improved.

(14) A manufacturing apparatus according to the embodiment includes: a first transport mechanism and a second transport mechanism; a pulley; and a laser light source. The first transport mechanism and the second transport mechanism are disposed to be spaced apart from each other, and transport a superconducting wire to be cut, along a longitudinal direction of the superconducting wire to be cut. The pulley is disposed between the first transport mechanism and the second transport mechanism, and supports a first main surface of the superconducting wire to be cut. The laser light source irradiates a second main surface at a portion of the superconducting wire to be cut supported by the pulley with a laser.

According to the manufacturing apparatus in (14), it is possible to suppress deviation of a focal point of the laser due to warpage of the superconducting wire to be cut.

(15) In the manufacturing apparatus in (14), the laser light source may have a galvano scanner that scans a position irradiated with the laser.

According to the manufacturing apparatus in (15), it is possible to reduce thermal influence on the superconducting wire due to irradiation with the laser.
(16) In the manufacturing apparatus in (14) or (15), the laser light source may further have a diffractive optical element that splits the laser into a plurality of beams. According to the manufacturing apparatus in (16), processing efficiency for the superconducting wire to be cut is improved.
(17) In the manufacturing apparatus in (14) to (16), the first transport mechanism may be located upstream of the second transport mechanism in a transport direction of the superconducting wire to be cut. The first transport mechanism may have a plurality of rollers disposed in a staggered manner. According to the manufacturing apparatus in (17), it is possible to further suppress deviation of the focal point of the laser due to warpage of the superconducting wire to be cut.
(18) In the manufacturing apparatus in (14) to (17), the pulley may have an outer circumferential surface that contacts the first main surface. A groove extending along a circumferential direction of the pulley may be formed in the outer circumferential surface. According to the manufacturing apparatus in (18), it is possible to suppress debris from being produced at the pulley after the laser penetrates the superconducting wire to be cut.
(19) In the manufacturing apparatus in (18), a flow path may be formed inside the pulley. The flow path may be opened at a bottom surface of the groove. When the superconducting wire to be cut is supported by the pulley, the superconducting wire to be cut may be sucked through the flow path. According to the manufacturing apparatus in (19), it is possible to remove debris produced after the laser penetrates the superconducting wire to be cut, from a location irradiated with the laser.

### [Details of Embodiment of the Present Disclosure]

Details of the embodiment of the present disclosure will be described with reference to the drawings. In the drawings below, identical or corresponding parts will be designated by the same reference numerals, and redundant description will not be repeated.

### (Configuration of Superconducting Wire 10)

Hereinafter, a configuration of a superconducting wire 10 will be described. Superconducting wire 10 is a superconducting wire to be cut.

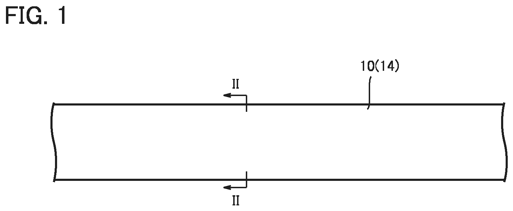

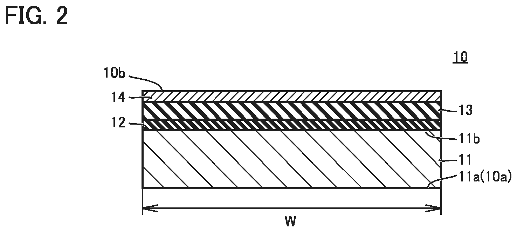

As shown in Figs. 1 and 2, superconducting wire 10 has a base material 11, an intermediate layer 12, a superconducting layer 13, and a protective layer 14. Superconducting wire 10 has a main surface 10a and a main surface 10b. Main surface 10a and main surface 10b are end surfaces in a thickness direction of superconducting wire 10. Main surface 10b is a surface opposite to main surface 10a. Main surface 10a is constituted by base material 11. Main surface 10b is constituted by protective layer 14.

A width of superconducting wire 10 is referred to as a width W. Width W is a width in a width direction of superconducting wire 10. The width direction of superconducting wire 10 is a direction orthogonal to both a longitudinal direction of superconducting wire 10 and the thickness direction of superconducting wire 10. Width W is 10 mm or more, for example. Width W may be 15 mm or more, 20 mm or more, 30 mm or more, 50 mm or more, or 100 mm or more. Width W may be 300 mm or less, 250 mm or less, or 200 mm or less.

Base material 11 has a main surface 11a and a main surface 11b. Main surface 11a and main surface 11b are end surfaces in a thickness direction of base material 11. Main surface 11a forms main surface 10a. Main surface 11b is a surface opposite to main surface 11a. Base material 11 is, for example, a clad material having a tape member made of stainless steel as a constituent material, a copper (Cu) layer disposed on a main surface of the tape member, and a nickel (Ni) layer disposed on the copper layer. In the copper layer, crystals of copper are oriented. Since crystals of copper are oriented in the copper layer, crystals of nickel are also oriented in the nickel layer. The tape member and the nickel layer constitute main surface 11a and main surface 11b, respectively. Base material 11 may be a tape member made of a metal material such as Hastelloy (registered trademark) or stainless steel as a constituent material. In this case, crystals do not have to be oriented in the tape member. A thickness of base material 11 is 130 µm or less, for example. The thickness of base material 11 may be 100 µm or less, or 50 µm or less. The thickness of base material 11 is 30 µm or more, for example.

Intermediate layer 12 is disposed on base material 11. More specifically, intermediate layer 12 is disposed on main surface 11b. Intermediate layer 12 is constituted by at least one of yttria-stabilized zirconium oxide (YSZ), cerium oxide (CeO₂), magnesium oxide (MgO), aluminum oxide (Al₂O₃), yttrium oxide (Y₂O₃), lanthanum manganate (LaMnO₃), gadolinium zirconate (Gd₂Zr₂O₇), and strontium titanate (SrTiO₃), for example. It should be noted that, in a case where base material 11 has the tape member made of stainless steel as a constituent material, the copper layer, and the nickel layer, intermediate layer 12 is constituted by stacking an yttrium oxide layer, an yttria-stabilized zirconium oxide layer, and a cerium oxide layer, for example. Since crystals of a constituent material are oriented in the nickel layer, crystals of constituent materials are also oriented in these layers.

In a case where base material 11 is the tape member made of Hastelloy or the like, intermediate layer 12 may be constituted by an underlayer, an ion beam assisted deposition (IBAD) layer disposed on the underlayer, and a surface layer disposed on the IBAD layer. The underlayer is constituted by stacking an aluminum oxide layer and an yttrium oxide layer, for example. The IBAD layer is a magnesium oxide layer, for example. The IBAD layer is a layer formed by an IBAD method, and crystals of a constituent material are oriented in the IBAD layer. The surface layer is constituted by stacking a magnesium oxide layer and a lanthanum manganate layer, for example. Since crystals of the constituent material are oriented in the IBAD layer, crystals of constituent materials are also oriented in the surface layer. It should be noted that constituent materials of intermediate layer 12 are not limited to those described above.

Superconducting layer 13 is disposed on intermediate layer 12. A constituent material of superconducting layer 13 is an oxide superconductor. Specific examples of the oxide superconductor include REBa₂Cu₃Oₓ. RE is a rare earth element. Examples of the rare earth element include gadolinium (Gd), yttrium (Y), europium (Eu), holmium (Ho), ytterbium (Yb), samarium (Sm), dysprosium (Dy), and neodymium (Nd). However, the rare earth element is not limited thereto. Since crystals of the constituent materials are oriented in intermediate layer 12 as described above, crystals of the constituent material are also oriented in superconducting layer 13. More specifically, in superconducting layer 13, a c-axis of crystals of the constituent material is oriented along a direction of a normal to main surface 11b.

Protective layer 14 is disposed on superconducting layer 13. A constituent material of protective layer 14 is silver (Ag) or a silver alloy, for example.

### (Method for Manufacturing Superconducting Wire Using Superconducting Wire 10)

Hereinafter, a method for cutting superconducting wire 10, that is, a method for manufacturing a superconducting wire using superconducting wire 10 will be described.

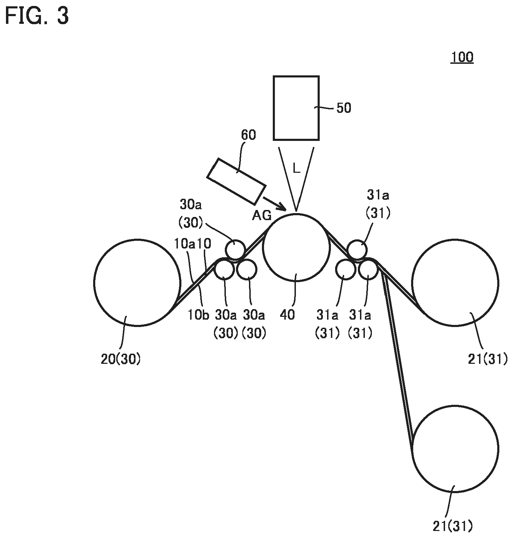

As shown in Fig. 3, cutting of superconducting wire 10 is performed using a manufacturing apparatus 100. Manufacturing apparatus 100 has a reel 20, a plurality of reels 21, a transport mechanism 30, transport mechanisms 31, a pulley 40, a laser light source 50, and a gas supply mechanism 60.

Superconducting wire 10 is wound around reel 20. A superconducting wire obtained by cutting superconducting wire 10, that is, a superconducting wire having a width smaller than width W of superconducting wire 10, is wound up around each of reels 21. The number of reels 21 is, for example, equal to the number of superconducting wires obtained by cutting. Although Fig. 3 shows an example in which reels 21 are disposed such that rotation axes of reels 21 are displaced rather than being coaxial, reels 21 may be disposed such that the rotation axes thereof are coaxial.

Transport mechanism 30 and transport mechanisms 31 are disposed to be spaced apart from each other. Transport mechanism 30 mainly has reel 20 and a drive source such as a motor for rotationally driving reel 20. Transport mechanism 31 mainly has reel 21 and a drive source such as a motor for rotationally driving reel 21. Transport mechanism 30 is located upstream of transport mechanisms 31 in a transport direction of superconducting wire 10. A radius of reel 20 and a radius of reels 21 are more than or equal to an allowable bending radius of superconducting wire 10. Transport mechanism 30 may further have a plurality of rollers 30a, for example. The plurality of rollers 30a are disposed in a staggered manner, for example. That is, roller 30a that contacts main surface 10a and roller 30a that contacts main surface 10b are arranged adjacent to each other in the longitudinal direction of superconducting wire 10, and are disposed at different positions in a direction of a normal to main surface 10a. Transport mechanism 31 may further have a plurality of rollers 31a, for example. The plurality of rollers 31a may be disposed in a staggered manner, for example. A radius of rollers 30a and a radius of rollers 31a are more than or equal to the allowable bending radius of superconducting wire 10. A diameter of rollers 30a and a diameter of rollers 31a are smaller than a diameter of reel 20 and a diameter of reels 21. The diameter of rollers 30a and the diameter of rollers 31a may be larger than the diameter of reel 20 and the diameter of reels 21.

Transport mechanism 30 and transport mechanisms 31 transport superconducting wire 10 along the longitudinal direction thereof, by causing superconducting wire 10 fed from reel 20 to be continuously unreeled using rollers 30a and rollers 31a while it is wound up around reels 21. When superconducting wire 10 is transported, a tension is applied to superconducting wire 10 mainly by reel 20 and reels 21. Rollers 30a and rollers 31a are driven rollers that rotate due to friction against superconducting wire 10, and feed superconducting wire 10 from reel 20 toward reels 21. At least one of rollers 30a or at least one of rollers 31a may be rotated by a drive source such as a motor. Thereby, the tension applied to superconducting wire 10 can be adjusted between reel 20 and reels 21.

It should be noted that, although the number of rollers 30a and the number of rollers 31a are three in the example shown, the number of rollers 30a and the number of rollers 31a are not limited thereto, and can be changed. Further, transport mechanism 31 does not have to have the plurality of rollers 31a.

Pulley 40 is disposed between reel 20 and reels 21, and is further disposed between transport mechanism 30 and transport mechanisms 31. Superconducting wire 10 is supported by pulley 40, at main surface 10b, for example. Pulley 40 rotates while supporting superconducting wire 10. Superconducting wire 10 may be pushed up in a direction from main surface 10b toward main surface 10a, at a location in contact with pulley 40. As shown in Fig. 3, superconducting wire 10 is pushed up by disposing pulley 40 such that a rotation axis of pulley 40 is located closer to laser light source 50 than a plane passing through a rotation axis of reel 20 and a rotation axis of reel 21 located closest to pulley 40, for example. Further, superconducting wire 10 may be pushed up by setting a diameter of pulley 40 to be larger than the diameter of reel 20 and the diameter of reels 21, or a drive mechanism for pushing up pulley 40 such that superconducting wire 10 comes closer to laser light source 50 may be attached to pulley 40. By disposing pulley 40 to push up superconducting wire 10 to which the tension is applied by reel 20 and reels 21, in a direction in which it comes closer to laser light source 50, in accordance with any of the above-described and other methods, warpage of superconducting wire 10 is corrected.

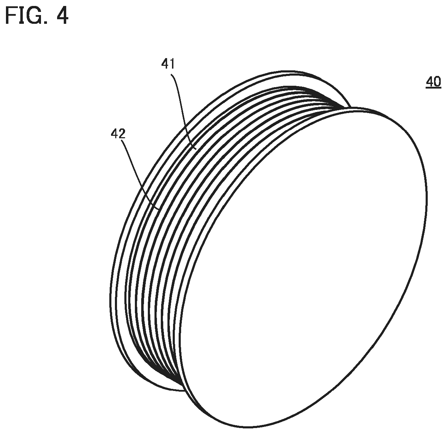

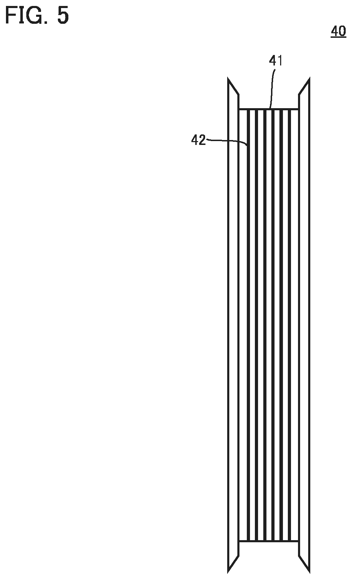

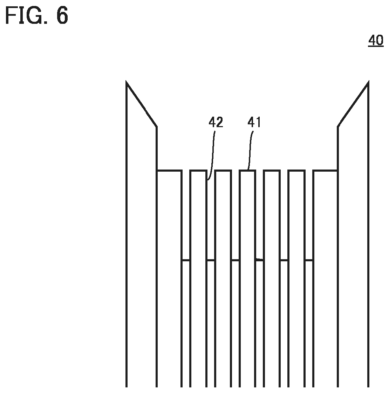

As shown in Figs. 4 to 6, pulley 40 has an outer circumferential surface 41. Outer circumferential surface 41 contacts main surface 10b. A plurality of grooves 42 are formed in outer circumferential surface 41. A spacing between adjacent grooves 42 is set according to the width of the superconducting wire obtained by cutting. Grooves 42 extend along a circumferential direction of pulley 40. The spacing between adjacent grooves 42 may be smaller than the width of the superconducting wire obtained from superconducting wire 10 by cutting, for example.

Laser light source 50 generates a laser L. In a state in which superconducting wire 10 is transported, main surface 10a at a portion of superconducting wire 10 supported by pulley 40 is irradiated with laser L. A wavelength of laser L is in a green band or an ultraviolet band, for example. The green band is a band having a wavelength of 490 nm or more and 550 nm or less. The ultraviolet band is a band having a wavelength of 380 nm or less.

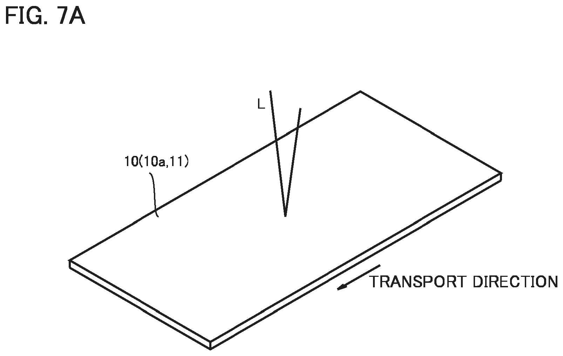

As shown in Fig. 7A, a position irradiated with laser L on main surface 10a may be fixed by using a fixed optical system. In this case, cutting of superconducting wire 10 proceeds as superconducting wire 10 is transported (see a solid arrow in the drawing).

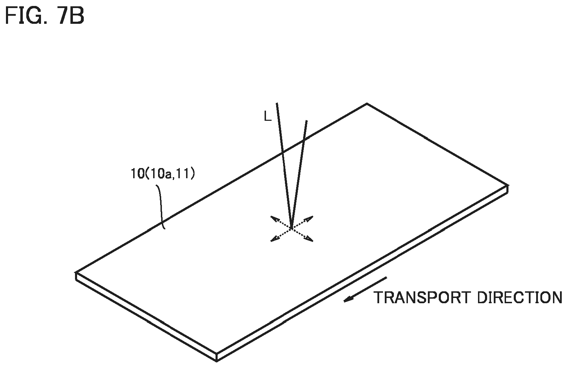

As shown in Fig. 7B, a position irradiated with laser L on main surface 10a may be scanned by using a galvano scanner. When the galvano scanner is used, as scanning of the position irradiated with laser L, both scanning along the longitudinal direction of superconducting wire 10 and scanning along the width direction of superconducting wire 10 can be performed. The scanning of the position irradiated with laser L is performed, for example, along the longitudinal direction of superconducting wire 10 (see a dotted arrow in the drawing). In this case, superconducting wire 10 is not cut by one scan (that is, laser L does not penetrate superconducting wire 10 in one scan). From another viewpoint, superconducting wire 10 is cut by scanning laser L a plurality of times. The scanning of the position irradiated with laser L along the longitudinal direction of superconducting wire 10 may be performed after changing the position irradiated with laser L in the width direction of superconducting wire 10 every time the scanning is performed a predetermined number of times (see a dotted arrow in the drawing).

As shown in Fig. 3, when main surface 10a is irradiated with laser L, an assist gas AG may be supplied from gas supply mechanism 60 to the vicinity of the position irradiated with laser L. Assist gas AG is air, for example. Assist gas AG may be an inert gas such as nitrogen.

Although the above description has described an example in which the number of reels 21 is plural, the number of reels 21 may be one. In a case where the number of reels 21 is one, superconducting wire 10 is wound up around reel 21 with an uncut portion being left at an end portion in the longitudinal direction of superconducting wire 10, and the uncut portion is removed separately. Further, while the number of reels 21 is two in the example shown in Fig. 3, in a case where the number of reels 21 is two, a superconducting wire having a preset width obtained by cutting superconducting wire 10 may be wound up around one reel 21, and a remaining portion of superconducting wire 10 other than the superconducting wire obtained by the cutting may be wound up around the other reel 21. Although the above description has described an example in which superconducting wire 10 is supported by pulley 40 at main surface 10b, superconducting wire 10 may be supported by pulley 40 at main surface 10a. In this case, superconducting wire 10 is pushed up in a direction from main surface 10a toward main surface 10b, at a location in contact with pulley 40, and main surface 10b at a portion of superconducting wire 10 supported by pulley 40 is irradiated with laser L.

### (Effects of Method for Manufacturing Superconducting Wire Using Superconducting Wire 10)

Hereinafter, effects of the method for manufacturing the superconducting wire using superconducting wire 10 will be described.

There is a difference between a thermal expansion coefficient of a constituent material of base material 11 and thermal expansion coefficients of constituent materials of intermediate layer 12 and superconducting layer 13. Due to such a difference in thermal expansion coefficient, warpage may occur in superconducting wire 10 in the width direction.

When warpage occurs in superconducting wire 10 in the width direction, the position of laser L in the thickness direction of superconducting wire 10 deviates from a set position set in a state where no warpage occurs in superconducting wire 10. Due to deviation of a focal position of laser L, a manner of processing with laser L changes from ablation processing to thermal processing, and thermal influence at a cut portion increases.

However, in the method for manufacturing the superconducting wire using superconducting wire 10, since superconducting wire 10 is supported by pulley 40, warpage as described above is corrected by the contact with pulley 40. Therefore, according to the method for manufacturing the superconducting wire using superconducting wire 10, it is possible to suppress deviation of a focal point of laser L due to warpage of superconducting wire 10, and thus it is possible to reduce thermal influence at a cut portion.

It should be noted that, in a case where superconducting wire 10 is not supported by pulley 40, superconducting wire 10 wobbles due to assist gas AG blowing thereto. Deviation of the focal position of laser L also occurs due to such a wobble of superconducting wire 10. However, according to the method for manufacturing the superconducting wire using superconducting wire 10, it is also possible to suppress deviation of the focal point of laser L due to such blowing of assist gas AG. Further, even when superconducting wire 10 is held down from above by a jig or the like to correct warpage of superconducting wire 10, debris accumulates on the jig. In this case, since superconducting wire 10 is covered with the jig or the like, supply of assist gas AG to a location irradiated with laser L is hindered.

When the position irradiated with laser L is scanned by the galvano scanner, the position irradiated with laser L is changed before thermal influence due to irradiation with laser L increases, and thus it is possible to further reduce thermal influence at a cut portion.

When transport mechanism 30 has the plurality of rollers 30a disposed in a staggered manner, superconducting wire 10 passes between the plurality of rollers 30a during transport, and thus warpage of superconducting wire 10 is corrected by a so-called leveler effect. Accordingly, in this case, it is possible to further suppress deviation of the focal point of laser L due to warpage of superconducting wire 10.

In superconducting wire 10, warpage occurs such that main surface 10a contracts and main surface 10b expands (that is, when it is assumed that main surface 10b faces downward, warpage protruding downward occurs). Accordingly, since superconducting wire 10 is supported by pulley 40 at main surface 10b (that is, at the surface constituted by protective layer 14), a protruding surface contacts outer circumferential surface 41, and thus warpage is easily corrected more effectively. Further, in this case, tact (cutting efficiency) is also improved.

When superconducting wire 10 is supported by pulley 40 at main surface 10a (that is, at the surface constituted by base material 11), cutting by irradiation with laser L proceeds from protective layer 14 toward base material 11. That is, in this case, superconducting layer 13 is cut earlier than base material 11. As a result, even when the cutting is not complete, cutting of superconducting layer 13 is completed, and base material 11 remains in a state where cutting thereof is not completed. Accordingly, even if superconducting wire 10 is physically divided thereafter, a load is less likely to be applied to superconducting layer 13. Therefore, when superconducting wire 10 is supported at main surface 10a, it is possible to suppress a decrease in performance of superconducting wire 10 due to cutting.

As the wavelength of laser L becomes shorter, a region subjected to ablation processing by laser L becomes larger than a region subjected to thermal processing by laser L. Accordingly, since the wavelength of laser L is in the ultraviolet band or the green band, superconducting wire 10 is mainly cut by ablation processing. It should be noted that, in a case where the wavelength of laser L is in the green band, its absorptivity with respect to protective layer 14 is higher than that in a case where the wavelength of laser L is in the ultraviolet band.

When grooves 42 are formed in outer circumferential surface 41, seizure between outer circumferential surface 41 and superconducting wire 10 can be suppressed. Further, in this case, pulley 40 is not irradiated with laser L until laser L reaches bottom surfaces of grooves 42 after penetrating superconducting wire 10. Accordingly, laser L is defocused at a time point when pulley 40 is irradiated with laser L, and debris is less likely to be produced from pulley 40 by irradiation with laser L. When assist gas AG is blown to the vicinity of the position irradiated with laser L, debris produced from superconducting wire 10 is easily removed by assist gas AG.

### <First Modification>

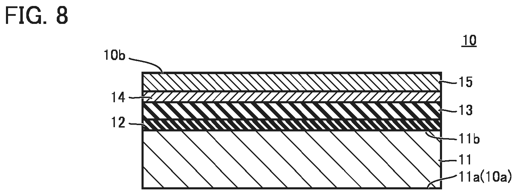

Fig. 8 is a cross sectional view of superconducting wire 10 according to a first modification. As shown in Fig. 8, superconducting wire 10 may further have a stabilized layer 15. Stabilized layer 15 is disposed on protective layer 14. A constituent material of stabilized layer 15 is copper or a copper alloy, for example. That is, stabilized layer 15 may be formed before superconducting wire 10 is cut.

### <Second Modification>

Although the above example has described a case where the wavelength of laser L is in the green band or the ultraviolet band, the wavelength of laser L may be in an infrared band. The infrared band is a band having a wavelength of 780 nm or more.

### <Third Modification>

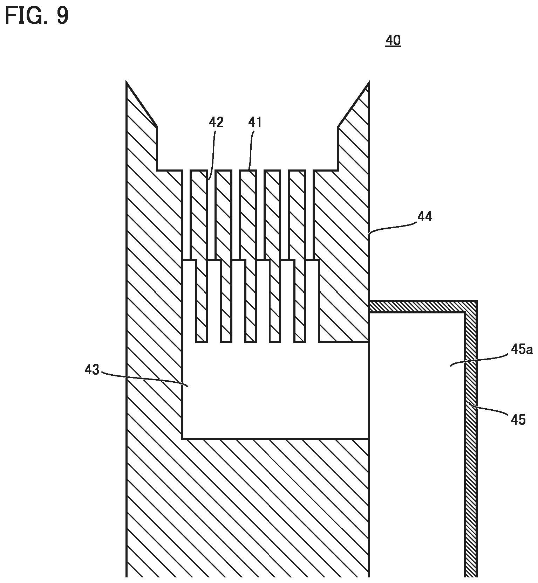

Fig. 9 is a schematic cross sectional view of pulley 40 according to a third modification. As shown in Fig. 9, a flow path 43 is formed inside pulley 40. Pulley 40 has a side surface 44, and a rotary joint 45 is attached to side surface 44. Flow path 43 is opened at one end at the bottom surfaces of grooves 42, and is connected at the other end to a flow path 45a inside rotary joint 45. When pulley 40 supports superconducting wire 10, superconducting wire 10 is sucked through flow path 43. When superconducting wire 10 is cut with laser L, debris is produced from superconducting wire 10. The debris is sucked through openings of flow path 43 formed at the bottom surfaces of grooves 42.

### <Fourth Modification>

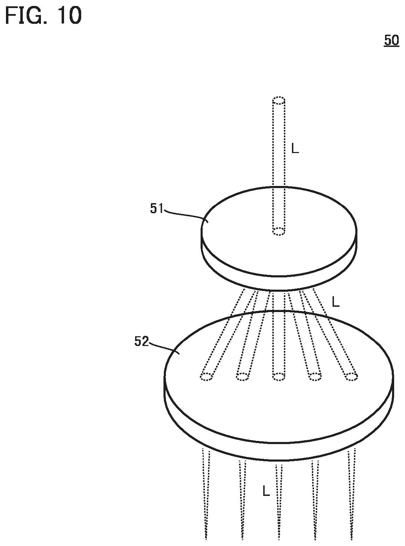

Fig. 10 is a schematic view of laser light source 50 according to a fourth modification. As shown in Fig. 10, laser light source 50 may split one beam of laser L into a plurality of beams. More specifically, laser light source 50 may have a diffractive optical element (DOE) 51 and a condenser lens 52. Although diffractive optical element 51 is disposed on an upstream side of condenser lens 52 on an optical path of laser L in an example shown in Fig. 10, condenser lens 52 may be disposed on an upstream side of diffractive optical element 51 in the optical path of laser L.

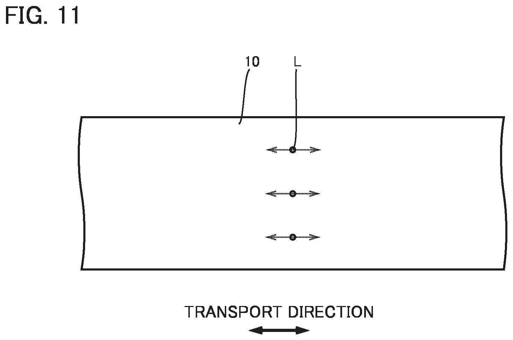

Fig. 11 is a schematic view showing a manner of irradiation with laser L when laser L is split into the plurality of beams. As shown in Fig. 11, positions irradiated with the plurality of beams of laser L are disposed with a spacing therebetween along the width direction of superconducting wire 10. Further, in this case, the position irradiated with each of the plurality of beams of laser L is scanned along the longitudinal direction of superconducting wire 10, by a galvano scanner, for example. Since it is thereby possible to simultaneously cut out a plurality of superconducting wires from superconducting wire 10, processing efficiency is improved. It should be noted that, also in this case, superconducting wire 10 (superconducting layer 13) is not cut by one scan (is cut by a plurality of scans), for example, in order to reduce thermal influence on superconducting layer 13.

### <Fifth Modification>

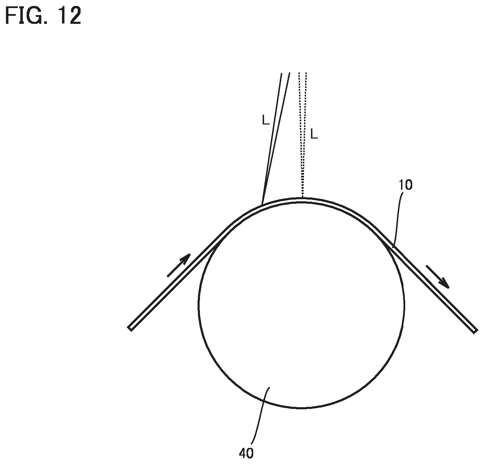

Fig. 12 is a schematic view showing a manner of irradiation with laser L according to a fourth modification. As shown in Fig. 12, a position irradiated with laser L in the longitudinal direction of superconducting wire 10 may be offset from a portion of superconducting wire 10 supported by pulley 40. When the position irradiated with laser L in the longitudinal direction of superconducting wire 10 is offset from the portion of superconducting wire 10 supported by pulley 40, superconducting wire 10 is irradiated with laser L in a defocused state. When superconducting wire 10 is irradiated with laser L in the defocused state, the manner of processing of superconducting wire 10 changes from ablation processing to thermal processing, and a processing speed is improved. For example, by applying laser L without defocusing when superconducting layer 13 is processed, and applying laser L with defocusing when base material 11 is processed, it is possible to achieve both a reduction in thermal influence on superconducting layer 13 and an improvement in processing speed. It should be noted that switching between ablation processing and thermal processing in the processing of superconducting wire 10 is not limited to offsetting of the position irradiated with laser L. For example, the manner of processing can be switched between when superconducting layer 13 is processed and when base material 11 is processed, by changing a pulse width of laser L or a frequency of a pulse of laser L.

### <Sixth Modification>

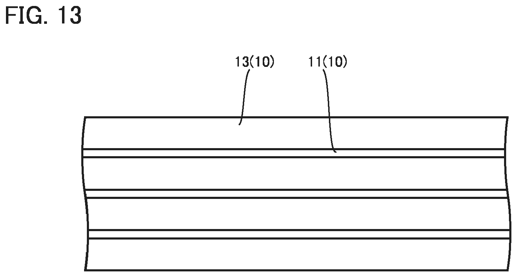

Although the above description has described processing of cutting superconducting wire 10 to cut out a plurality of superconducting wires, processing for superconducting wire 10 may be scribing processing. Fig. 13 is a plan view of superconducting wire 10 according to a sixth modification subjected to scribing processing. As shown in Fig. 13, superconducting layer 13 is cut by being irradiated with laser L, whereas base material 11 does not have to be cut. In this case, since superconducting layer 13 is divided into a plurality of portions along the width direction of superconducting wire 10, it is possible to suppress an eddy current from flowing through superconducting layer 13.

It should be understood that the embodiment disclosed herein is illustrative and non-restrictive in every respect. The scope of the present invention is defined by the scope of the claims, rather than the embodiment described above, and is intended to include any modifications within the scope and meaning equivalent to the scope of the claims.

### REFERENCE SIGNS LIST

10: superconducting wire; 10a: main surface; 10b: main surface; 11: base material; 11a: main surface; 11b: main surface; 12: intermediate layer; 13: superconducting layer; 14: protective layer; 15: stabilized layer; 20, 21: reel; 30: transport mechanism; 30a: roller; 31: transport mechanism; 31a: roller; 40: pulley; 41: outer circumferential surface; 42: groove; 43: flow path; 44: side surface; 45: rotary joint; 50: laser light source; 51: diffractive optical element; 52: condenser lens; 60: gas supply mechanism; 100: manufacturing apparatus; L: laser; W: width.

## Claims

1. A method for manufacturing a superconducting wire, the method comprising:
preparing a superconducting wire to be cut having a first main surface and a second main surface opposite to the first main surface;
transporting the superconducting wire to be cut, along a longitudinal direction of the superconducting wire to be cut, by a first transport mechanism and a second transport mechanism which are disposed to be spaced apart from each other, the superconducting wire to be cut being supported, at the first main surface, by a pulley disposed between the first transport mechanism and the second transport mechanism; and
cutting the superconducting wire to be cut, by irradiating the second main surface at a portion of the superconducting wire to be cut supported by the pulley with a laser when the superconducting wire to be cut is transported.

2. The method for manufacturing the superconducting wire according to claim 1, wherein, on the second main surface, a position irradiated with the laser is scanned by a galvano scanner.

3. The method for manufacturing the superconducting wire according to claim 1 or 2, wherein
the first transport mechanism is located upstream of the second transport mechanism in a transport direction of the superconducting wire to be cut, and
the first transport mechanism has a plurality of rollers disposed in a staggered manner.

4. The method for manufacturing the superconducting wire according to any one of claims 1 to 3, wherein
the pulley has an outer circumferential surface that contacts the first main surface, and
a groove extending along a circumferential direction of the pulley is formed in the outer circumferential surface.

5. The method for manufacturing the superconducting wire according to claim 4, wherein
a flow path is formed inside the pulley,
the flow path is opened at a bottom surface of the groove, and
when the superconducting wire to be cut is supported by the pulley, the superconducting wire to be cut is sucked through the flow path.

6. The method for manufacturing the superconducting wire according to any one of claims 1 to 5, wherein
the superconducting wire to be cut further has a base material, an intermediate layer disposed on the base material, and a superconducting layer disposed on the intermediate layer, and
the base material constitutes the second main surface.

7. The method for manufacturing the superconducting wire according to any one of claims 1 to 5, wherein
the superconducting wire to be cut further has a base material, an intermediate layer disposed on the base material, and a superconducting layer disposed on the intermediate layer, and
the base material constitutes the first main surface.

8. The method for manufacturing the superconducting wire according to claim 6 or 7, wherein
the superconducting wire to be cut further has a protective layer, and
the protective layer is disposed on the superconducting layer.

9. The method for manufacturing the superconducting wire according to claim 8, wherein
the superconducting wire to be cut further has a stabilized layer, and
the stabilized layer is disposed on the protective layer.

10. The method for manufacturing the superconducting wire according to any one of claims 1 to 9, wherein a wavelength of the laser is in a green band, an ultraviolet band, or an infrared band.

11. The method for manufacturing the superconducting wire according to any one of claims 1 to 10, wherein an assist gas is supplied to a location irradiated with the laser.

12. The method for manufacturing the superconducting wire according to claim 1, wherein
the laser is split into a plurality of beams by a diffractive optical element, and
a position irradiated with each of the plurality of beams is scanned by a galvano scanner.

13. The method for manufacturing the superconducting wire according to claim 1, wherein, on the second main surface, a position irradiated with the laser is offset along the longitudinal direction of the superconducting wire to be cut.

14. A manufacturing apparatus comprising:
a first transport mechanism and a second transport mechanism;
a pulley; and
a laser light source, wherein
the first transport mechanism and the second transport mechanism are disposed to be spaced apart from each other, and transport a superconducting wire to be cut, along a longitudinal direction of the superconducting wire to be cut,
the pulley is disposed between the first transport mechanism and the second transport mechanism, and supports a first main surface of the superconducting wire to be cut, and
the laser light source irradiates a second main surface at a portion of the superconducting wire to be cut supported by the pulley with a laser.

15. The manufacturing apparatus according to claim 14, wherein the laser light source has a galvano scanner that scans a position irradiated with the laser.

16. The manufacturing apparatus according to claim 15, wherein the laser light source further has a diffractive optical element that splits the laser into a plurality of beams.

17. The manufacturing apparatus according to any one of claims 14 to 16, wherein
the first transport mechanism is located upstream of the second transport mechanism in a transport direction of the superconducting wire to be cut, and
the first transport mechanism has a plurality of rollers disposed in a staggered manner.

18. The manufacturing apparatus according to any one of claims 14 to 17, wherein
the pulley has an outer circumferential surface that contacts the first main surface, and
a groove extending along a circumferential direction of the pulley is formed in the outer circumferential surface.

19. The manufacturing apparatus according to claim 18, wherein
a flow path is formed inside the pulley,
the flow path is opened at a bottom surface of the groove, and
when the superconducting wire to be cut is supported by the pulley, the superconducting wire to be cut is sucked through the flow path.
